## Europäisches Patentamt

(19) **European Patent Office**

**Office européen des brevets**

(11) Veröffentlichungsnummer: **0 099 055**
**B1**

(12) **EUROPÄISCHE PATENTSCHRIFT**

(45) Veröffentlichungstag der Patentschrift:
**16.10.85**

(51) Int. Cl.⁴: **C 25 D 13/08**, C 08 J 5/18,
C 08 G 73/06

(21) Anmeldenummer: **83106585.9**

(22) Anmeldetag: **06.07.83**

(54) Verfahren zur Herstellung von filmförmigen Polymeren von Pyrrolen.

(30) Priorität: **14.07.82 DE 3226278**

(43) Veröffentlichungstag der Anmeldung:
**25.01.84 Patentblatt 84/4**

(45) Bekanntmachung des Hinweises auf die Patenterteilung:
**16.10.85 Patentblatt 85/42**

(84) Benannte Vertragsstaaten:
**BE DE FR GB NL**

(56) Entgegenhaltungen:
**DE - A - 2 262 468**
**US - A - 1 548 689**
**US - A - 3 574 072**

(73) Patentinhaber: **BASF Aktiengesellschaft,**
**Carl-Bosch-Strasse 38, D-6700 Ludwigshafen (DE)**

(72) Erfinder: **Naarmann, Herbert, Dr., Haardtblick 15,**
**D-6719 Wattenheim (DE)**
Erfinder: **Koehler, Gernot, Dr., Berner Weg 32,**
**D-6700 Ludwigshafen (DE)**
Erfinder: **Schlag, Johannes, Dr., Leuschnerstrasse 36,**
**D-6700 Ludwigshafen (DE)**

## Beschreibung

Die Erfindung betrifft ein Verfahren zur Herstellung von filmförmigen Polymeren von Pyrrolen durch elektrochemische Polymerisation von Pyrrolen alleine oder zusammen mit anderen Comonomeren in einem Elektrolyt-Lösungsmittel in Gegenwart von Leitsalzen, wobei sich das durch anodische Oxidation gebildete Polymere filmförmig auf der flächigen Anode abscheidet.

Die elektrochemische Polymerisation von Pyrrolen ist bekannt (vgl. z.B. US-PS 3 574 072). Nach Arbeiten von A.F. Diaz et al., J.C.S. Chem. Comm. 1979, Seite 635; J.C.S. Chem. Comm. 1979, Seite 854 und ACS org. Coat. Plast. Chem. 43 (1980) werden bei der anodischen Polymerisation von Pyrrol in Gegenwart von Leitsalzen Filme mit elektrischen Leitfähigkeiten bis zu $10^2\Omega^{-1}cm^{-1}$ gebildet. Hierbei handelt es sich um p-leitende Polypyrrole, wobei als Gegenanionen vor allem $BF_4^-$, $AsF_6^-$, $ClO_4^-$ und $SO_4^-$ genannt werden.

Bei den bislang beschriebenen Verfahren zur Herstellung von Polypyrrol-Filmen wird die elektrochemische Polymerisation in einer üblichen elektrolytischen Zelle mit oder ohne Diaphragma im allgemeinen mit Edelmetall-Elektroden, insbesondere Platin-Elektroden, durchgeführt. Das durch anodische Oxidation gebildete Polypyrrol scheidet sich dabei als Film auf der flächig ausgebildeten Anode ab. Ein gravierender Nachteil dieser Verfahrensweise ist, dass die Grösse des resultierenden Polypyrrol-Filmes durch die Grösse der Anoden-Fläche limitiert ist. Für die Herstellung von grossen Filmen braucht man entsprechende grossflächige Anoden, was apparativ sehr aufwendig ist. Ausserdem ist die Herstellung grösserer Mengen an Polypyrrol-Filmen wegen der diskontinuierlichen Arbeitsweise beschwerlich und arbeitsaufwendig.

Aufgabe der vorliegenden Erfindung ist es, ein leicht durchführbares Verfahren zur Herstellung von elektrisch hochleitfähigen filmförmigen Polymeren von Pyrrolen aufzuzeigen, welches die Herstellung solcher Filme in grossen Mengen und in beliebiger Grösse in einfacher und wirtschaftlicher Weise gestattet, wobei eine gleichmässige Dicke, eine glatte Oberfläche und homogene elektrische Leitfähigkeit über die Gesamtfläche des Polymerfilmes erreicht werden.

Diese Aufgabe wird erfindungsgemäss dadurch gelöst, dass man bei der Herstellung der filmförmigen Polymeren von Pyrrolen kontinuierlich mittels einer bewegten Anode unter ständiger Erneuerung der Anodenoberfläche arbeitet.

Gegenstand der Erfindung ist demzufolge ein Verfahren zur Herstellung von filmförmigen Polymeren von Pyrrolen durch elektrochemische Polymerisation von Pyrrolen oder Mischungen von Pyrrolen mit anderen Comonomeren in einem Elektrolyt-Lösungsmittel in Gegenwart von Leitsalzen unter Abscheiden des Polymer-Films auf der Oberfläche der Anode, welches dadurch gekennzeichnet ist, dass die Elektrolyse kontinuierlich betrieben wird, indem man fortlaufend durch die Elektrolyt-Lösung flächenförmig ausgebildetes anodenaktives Material für die Abscheidung des filmförmigen Polymeren durchführt.

Spezielle und bevorzugte Ausgestaltungsformen des erfindungsgemässen Verfahrens ergeben sich aus der nachfolgenden detaillierten Beschreibung.

Durch das erfindungsgemässe kontinuierliche Verfahren ist es möglich, Filme von Pyrrol-Polymeren in einfacher und wirtschaftlicher Weise in beliebigen Grössen herzustellen. Die Filme lassen sich auch beim Abscheiden der Pyrrol-Polymeren in dünneren Schichten, etwa in einer Schichtstärke von 10 bis 20 µm, problemlos und ohne Schwierigkeiten direkt nach der Herstellung von der Oberfläche des anodenaktiven Materials abziehen und beispielsweise auf einen Wickel aufrollen. Trotz der Tatsache, dass das anodenaktive Material fortlaufend durch die Elektrolyt-Lösung bewegt und durchgeführt wird, wodurch es zu unterschiedlichen Abständen zwischen Kathode und Anode und damit zu unterschiedlichen Stromdichten bei der Elektrolyse als auch zu unterschiedlichen Elektrolyt-Konzentrationen kommen kann, hat es sich gezeigt, dass die erhaltenen filmförmigen Polymeren von den Pyrrolen sehr homogen und einheitlich aufgebaut sind und eine gleichmässige elektrische Leitfähigkeit über ihre Gesamtfläche besitzen.

Unter Pyrrolen werden im Rahmen dieser Erfindung das unsubstituierte Pyrrol selber als auch die substituierten Pyrrole, wie die N-Alkylpyrrole, N-Arylpyrrole, die an den C-Atomen monoalkyl- oder dialkylsubstituierten Pyrrole und die an den C-Atomen monohalogen- oder dihalogensubstituierten Pyrrole verstanden. Die Pyrrole können alleine oder in Mischung miteinander eingesetzt werden. Vorzugsweise geht man zur Herstellung der filmförmigen Polymeren vom unsubstituierten Pyrrol selber aus. Werden substituierte Pyrrole in dem erfindungsgemässen Verfahren eingesetzt, sind hierfür die 3,4-Dialkylpyrrole, insbesondere solche mit 1 bis 4 C-Atomen im Alkylrest, wie 3,4-Dimethylpyrrol und 3,4-Diethylpyrrol, wie auch die 3,4-Dihalogenpyrrole, insbesondere 3,4-Dichlorpyrrol, bevorzugt.

Als Comonomere, die zusammen mit den Pyrrolen in dem erfindungsgemässen Verfahren eingesetzt werden können, kommen neben Alkinen, wie z.B. Acetylen, und mehrkernigen Aromaten, wie z.B. den Oligophenylenen, Acenaphthen, Phenanthren oder Tetracen, insbesondere andere 5- und/oder 6gliedrige heterocyclische aromatische Verbindungen in Betracht. Bei diesen anderen heteroaromatischen Verbindungen, die vorzugsweise 1 bis 3 Heteroatome im Ringsystem enthalten und die an den Heteroatomen oder den Ring-Kohlenstoffatomen beispielsweise durch Alkylgruppen, insbesondere mit 1 bis 6 C-Atomen, substituiert sein können, sind vorzugsweise mindestens zwei Ring-Kohlenstoffatome nicht substituiert, um die anodische Oxidation einfach und gut durchführen zu können. Beispiele für heteroaromatische Verbindungen, die als Comonomere gut geeignet sind und die hierbei allein oder in Mischung miteinander zum Einsatz kommen können, sind Furan, Thiophen, Thiazol, Oxazol, Thiadiazol, Imidazol, Pyridin, 3,5-Dimethylpyridin, Pyrazin und 3,5-Dimethylpyrazin. Besonders bewährt haben sich als Comonomere die 5gliedrigen heteroaromatischen Verbindungen, wie Furan, Thiophen, Thiazol und Thiadiazol. Werden in dem erfindungsgemässen Verfahren Pyrrole zusammen mit anderen Comonomeren eingesetzt, so kann das Gewichtsverhältnis der Pyrrole zu den anderen Comonomeren in weiten Grenzen, z.B. von 1 : 99 bis 99 : 1, schwanken. Vorzugsweise enthalten solche Comonomer-Mischungen 20 bis 90 Gew.-% der Pyrrole und 80 bis 10 Gew.-% der anderen Comonomeren, jeweils bezogen auf die Summe von Pyrrolen und anderen Comonomeren.

Zur Herstellung der filmförmigen Polymere werden die Monomeren, das sind die Pyrrole sowie gegebenenfalls die Comonomeren, in einem Elektrolyt-Lösungsmittel in Gegenwart eines geeigneten Leitsalzes anodisch oxidiert und dabei polymerisiert. Die Monomer-Konzentration beträgt hierbei üblicherweise etwa 0,1 Mol pro Liter Lösungsmittel. Diese Konzentration kann jedoch in weiten Grenzen unterschritten aber auch überschritten werden. Da in dem erfindungsgemässen kontinuierlichen Verfahren die Konzentration der Monomeren und des Leitsalzes in der Elektrolyt-Lösung bei hinreichend langer Elektrolyse-Dauer allmählich abnimmt, kann die Elektrolyt-Lösung im Bedarfsfall auch aufgefrischt werden, d.h. es können frische Monomeren und/oder Leitsalz während der Elektrolyse nachdosiert werden. Dies geschieht am besten durch Umpumpen der Elektrolyt-Lösung und Zudosieren der Monomeren und/oder des Leitsalzes in dem gewünschten Masse ausserhalb der eigentlichen Elektrolysevorrichtung. Es sei jedoch hervorgehoben, dass für das erfindungsgemässe kontinuierliche Verfahren und die Herstellung von einheitlichen gleichförmigen Polymer-Filmen die Konzentration an Monomeren und/oder Leitsalz in der Elektrolyt-Lösung nicht zwingendermassen konstant gehalten werden muss, so dass das erfindungsgemässe Verfahren in einem einfachen geschlossenen Elektrolysegefäss ohne Umlauf der Elektrolyt-Lösung durchgeführt werden kann. Dies gilt insbesondere bei der üblichen Verfahrensweise, bei der nur bis zu vergleichsweise geringen Umsätzen gearbeitet wird.

Als Elektrolyt-Lösungsmittel können in dem erfindungsgemässen Verfahren die für die elektrochemische Polymerisation von Pyrrolen an sich bekannten und üblichen polaren organischen Lösungsmittel, die die Monomeren und das Leitsalz zu lösen vermögen, eingesetzt werden. Wenn mit Wasser mischbare organische Lösungsmittel Einsatz finden, kann zur Erhöhung der elektrischen Leitfähigkeit eine geringe Menge an Wasser, im allgemeinen bis zu 10 Gew.-%, bezogen auf das organische Lösungsmittel, zugesetzt werden. Bevorzugte organische Elektrolyt-Lösungsmittel sind z.B. Alkohole, Ether wie 1,2-Dimethoxyethan, Dioxan, Tetrahydrofuran und Methyltetrahydrofuran, Aceton, Acetonitril, Dimethylformamid, Dimethylsulfoxid, Methylenchlorid, N-Methylpyrrolidon und Propylencarbonat, ebenso Gemische dieser Lösungsmittel oder auch Polyglykole, die sich vom Ethylenglykol, Propylenglykol oder Tetrahydrofuran ableiten, wie z.B. Polyethylenglykol, Polypropylenglykol, Polybutylenglykol, oder Ethylenoxid-/Propylenoxid-Mischpolymere, und die vorzugsweise durch Endgruppenverschluss als vollständige Polyether vorliegen. Man kann das erfindungsgemässe Verfahren aber auch in wässerigen Elektrolyt-Systemen durchführen, wie sie z.B. in der US-PS 3 574 072 beschrieben sind.

Als Leitsalze können in dem erfindungsgemässen Verfahren ebenfalls die für die elektrochemische Polymerisation von Pyrrolen an sich bekannten und üblichen ionischen oder ionisierbaren Verbindungen eingesetzt werden, insbesondere solche mit Anionen starker, oxidierender Säuren oder von gegebenenfalls mit Alkyl- und/oder Nitro-Gruppen substituierten Aromaten mit sauren Gruppen. Bevorzugte Leitsalze enthalten als Kationen die Alkalimetall-Kationen, insbesondere $Li^+$, $Na^+$ oder $K^+$; die $NO^+$- und $NO_2{}^+$-Kationen oder Onium-Kationen, vor allem des Stickstoffs und des Phosphors, etwa des Typs $R_4N^+$ und $R_4P^+$, worin die Reste R unabhängig voneinander Wasserstoffatome, niedere Alkylreste, vorzugsweise mit 1 bis 6 C-Atomen, cycloaliphatische Reste, vorzugsweise mit 6 bis 14 C-Atomen, oder aromatische Reste, vorzugsweise mit 6 bis 14 C-Atomen, bedeuten. Beispielhaft für derartige Onium-Kationen seien das Tetramethylammonium-, das Tetraethylammonium-, das Tri-n-butylammonium-, das Tetra-n-butylammonium-, das Triphenylphosphonium- und das Tri-n-butylphosphonium-Kation genannt. Als Anionen für die Leitsalze haben sich $BF_4{}^-$, $AsF_4{}^-$, $AsF_6{}^-$, $SbF_6{}^-$, $SbCl_6{}^-$, $PF_6{}^-$, $ClO_4{}^-$, $HSO_4{}^-$ und $SO_4{}^{2-}$ als besonders günstig erwiesen. Bei einer weiteren Gruppe von Leitsalzen, die mit besonderem Vorteil in dem erfindungsgemässen Verfahren eingesetzt werden, leiten sich die Anionen von Aromaten mit sauren Gruppen ab. Hierzu gehören neben dem $C_6H_5COO^-$-Anion insbesondere die Anionen von gegebenenfalls mit Alkylgruppen substituierten aromatischen Sulfonsäuren. Besonders bevorzugt sind Leitsalze, die das Benzolsulfonat- oder Tosylat-Anion enthalten. In einer weiteren sehr günstigen Ausführungsform können die Aromaten mit sauren Gruppen auch noch mit Nitro-Gruppen substituiert sein. Zu den Leitsalzen auf Basis dieser sauren Nitroaromaten zählen z.B. die Salze von Nitrophenolen, von Nitrogruppen-substituierten aromatischen Carbonsäuren und von Nitrogruppen-substituierten aromatischen Sulfonsäuren. Insbesondere finden die Salze von Nitro-, Dinitround Trinitrophenolen, Nitro-, Dinitro- und Trinitro-benzoesäuren sowie Nitro-, Dinitro- und Trinitro-benzolsulfonsäuren Einsatz.

Die Leitsalzkonzentration in dem erfindungsgemässen Verfahren beträgt im allgemeinen 0,001 bis 1, vorzugsweise 0,01 bis 0,1 Mol pro Liter.

Das erfindungsgemässe Verfahren kann in einer elektrolytischen Zelle oder Elektrolyse-Apparatur, bestehend aus einer Zelle mit oder ohne Diaphragma, einer Kathode, einer Anode und einer externen Gleichstromquelle, durchgeführt werden. Erfindungswesentliches Merkmal ist, dass die elektrochemische Polymerisation dabei kontinuierlich mittels einer beweglichen Anode betrieben wird, indem man fortlaufend flächenförmig ausgebildetes anodenaktives Material durch die Elektrolyt-Lösung durchführt. Dadurch steht in der Elektrolyt-Lösung stets unbelegtes anodenaktives Material zum Abscheiden des filmförmigen Polymeren zur Verfügung.

Dies kann in einer einfachen und sehr günstigen Ausführungsform der Erfindung in der Weise verwirklicht werden, dass das anodenaktive Material auf die Oberfläche eines Zylinders aufgebracht ist bzw. die Oberfläche dieses Zylinders darstellt, wobei dieser Zylinder während der Elektrolyse in der Elektrolyt-Lösung rotiert. Unter Zylinder wird hierbei sowohl eine Zylinderwalze als auch einfach nur ein Zylinder-Mantel, d.h. ein Hohlzylinder, verstanden. Anstelle des Zylinders kann gleichermassen und mit gleichem Vorteil auch ein endloses, um Walzen laufendes Band eingesetzt werden, das auf seiner Oberfläche das anodenaktive Material enthält. Der Zylinder bzw. das endlose Band wird mit einer solchen Geschwindigkeit durch die Elektrolyt-Lösung bewegt, dass sich unter den jeweiligen Elektrolyse-Bedingungen ein Polymer-Film von der gewünschten Stärke auf dem anodenaktiven Material abscheidet. Das gebildete filmförmige Polymere wird dann fortlaufend von der Oberfläche des durch die Elektrolyt-Lösung rotierenden Zylinders bzw. der Oberfläche des durch die Elektrolyt-Lösung transportierten endlosen Bandes abgezogen und kann, gegebenenfalls nach Spülen mit einem Lösungsmittel zur Entfernung von anhaftendem Leitsalz und Trocknen, aufgewickelt werden.

Bei dieser Ausführungsform des erfindungsgemässen Verfahrens kann der Zylinder bzw. das um Walzen laufende endlose Band vollständig in die Elektrolyt-Lösung eingetaucht sein. In diesem Fall muss der entstehende Polymer-Film in der Elektrolyt-Lösung von der Oberfläche des anodenaktiven Materials abgehoben und abgezogen werden, wozu man sich vorteilhafterweise einer geeigneten Abhebevorrichtung, beispielsweise eines Schabers, Abstreifmessers oder einer synchron laufenden ein- oder beidseitigen Kontakt-Klebefolie, bedient. Im allgemeinen ist es jedoch einfacher und günstiger, wenn der rotierende Zylinder bzw. das um Walzen laufende endlose Band nur teilweise in die Elektrolyt-Lösung eintaucht, so dass das in der Elektrolyt-Lösung auf dem anodenaktiven Material abgeschiedene filmförmige Polymere aus der Elektrolyt-Lösung heraustransportiert wird, ausserhalb der Elektrolyt-Lösung, gegebenenfalls mit Hilfe einer wie oben erwähnten geeigneten Abhebevorrichtung, von der Oberfläche des Zylinders bzw. des endlosen Bandes abgetrennt und abgezogen werden kann und danach das anodenaktive Material mit freier, unbeschichteter Oberfläche wieder in die Elektrolyt-Lösung eingezogen wird. Diese letztgenannte Arbeitsweise, bei der der rotierende Zylinder bzw.

das um Walzen laufende endlose Band nur teilweise in die Elektrolyt-Lösung eintaucht, bringt bei der Handhabung und insbesondere beim Abziehen des filmförmigen Polymeren von dem anodenaktiven Material wesentliche Vorteile mit sich.

In einer anderen Durchführungsform des erfindungsgemässen Verfahrens kann das anodenaktive Material in Form eines endlichen Bandes beispielsweise von einem Wickel, der sich ausserhalb der Elektrolyt-Lösung befindet, in die Elektrolyt-Lösung eingezogen, durch diese hindurchtransportiert und wieder aus der Elektrolyt-Lösung ausgetragen werden. Der Transport des anodenaktiven Materials durch die Elektrolyt-Lösung findet auch in diesem Fall mit einer Geschwindigkeit statt, die es gestattet, unter den gegebenen Elektrolyse-Bedingungen einen Polymer-Film in der gewünschten Dicke auf dem anodenaktiven Material abzuscheiden.

Bei dieser Ausführungsform des erfindungsgemässen Verfahrens ist es zwar möglich, jedoch nicht nötig, das abgeschiedene filmförmige Polymere von dem anodenaktiven Material abzutrennen. Das Arbeiten mit einem anodenaktiven Material in Form eines endlichen Bandes empfiehlt sich daher insbesondere immer dann, wenn der erhaltene Polymer-Film auf dem anodenaktiven Material verbleiben soll. Dies kann beispielsweise für besondere Anwendungszwecke, etwa die Herstellung spezieller Elektroden-Materialien, wünschenswert sein. Die Ausführungsform, als anodenaktives Material ein endliches Band einzusetzen, bietet darüber hinaus die Möglichkeit, in einfacher und bequemer Weise in dem erfindungsgemässen Verfahren verschiedenartige anodenaktive Materialien, die dann auch als Substrate für den erhaltenen Polymer-Film dienen können, einzusetzen. Wie bereits erwähnt, ist es bei Einsatz eines endlichen Bandes als anodenaktiven Material zweckmässig, das anodenaktive Material von ausserhalb in die Elektrolyt-Lösung einzuziehen und der elektrochemischen Polymerisation wieder aus der Elektrolyt-Lösung auszutragen.

Das anodenaktive Material kann in dem erfindungsgemässen Verfahren segmentiert vorliegen, d.h. in Form von diskreten Abschnitten und Flächen, die auf einem geeigneten Träger, z.B. einem Zylindermantel, der Oberfläche eines um Walzen laufenden endlosen Bandes oder eines endlichen Bandes, aufgebracht sind. In diesem Fall erhält man kontinuierlich einzelne Polymer-Filme in der Grösse der segmentierten, diskreten Flächen des anodenaktiven Materials. Bei Einsatz von derart segmentiertem anodenaktiven Material kann der Transport durch die Elektrolyt-Lösung auf dem Träger nicht nur vollkontinuierlich, sondern auch abschnittsweise fortlaufend in der Art geschehen, dass eine oder mehrere segmentierte Flächen des anodenaktiven Materials durch Transport des Trägers in die Elektrolyt-Lösung eingebracht werden, die elektrochemische Polymerisation unter Abscheiden des filmförmigen Polymeren auf den segmentierten Flächen des anodenaktiven Materials ohne weiteren Transport des Trägers erfolgt und anschliessend die mit dem Polymeren beschichteten segmentierten Flächen des anodenaktiven Materials durch Transport des Trägers aus der Elektrolyt-Lösung ausgetragen werden, wobei gleichzeitig eine oder mehrere neue unbeschichtete segmentierte Flächen des anodenaktiven Materials in die Elektrolyt-Lösung eingebracht werden.

Im allgemeinen wird das erfindungsgemässe Verfahren jedoch mit einem bandförmig ausgebildeten, d.h. zusammenhängenden anodenaktiven Material betrieben. Beispiele hierfür sind u.a. die Oberfläche eines Zylinders, die das anodenaktive Material darstellt oder mit diesem durchgehend beschichtet ist, sowie ein von Walzen umlaufendes endloses bzw. ein endliches Band, dessen gesamte Oberfläche das anodenaktive Material bildet. In diesem Fall wird das anodenaktive Material üblicherweise vollkontinuierlich, d.h. auch während der Elektrolyse und Polymer-Abscheidung, durch die Elektrolyt-Lösung transportiert. Man erhält hierbei einen zusammenhängenden Polymer-Film beliebiger Länge, der aufgewickelt oder je nach Anwendungszweck in die entsprechende und gewünschte Grösse zugeschnitten werden kann. Auf diese Weise ist es möglich, sehr lange und elektrisch hochleitfähige Filme, Bänder oder Streifen aus den Pyrrol-Polymeren herzustellen.

Als anodenaktives Material kann in dem erfindungsgemässen Verfahren grundsätzlich jedes beliebige und bekannte Elektroden-Material eingesetzt werden. Für den Fall, dass das anodenaktive Material die Oberfläche eines Zylinders oder eines endlosen Bandes darstellt, muss es darüber hinaus so beschaffen sein, dass sich das gebildete filmförmige Polymere hiervon ohne Schwierigkeiten abziehen lässt. Als anodenaktives Material kommen hierbei insbesondere Metalle, wie z.B. Platin, Molybdän, Wolfram oder Edelstähle, vorzugsweise Nickel oder Titan, in Betracht, wobei die Oberfläche des anodenaktiven Materials vorteilhafterweise möglichst glatt ist. In dem Fall, in dem das anodenaktive Material die Oberfläche eines endlichen Bandes darstellt, welches beispielsweise von einem Wickel in die Elektrolyt-Lösung eingezogen wird, können als anodenaktives Material neben den genannten Metallen auch solche Stoffe eingesetzt werden, auf denen das erhaltene filmförmige Polymere fest haftet, so dass es von dem anodenaktiven Material nicht oder nur sehr schwierig abgetrennt werden kann. Dies ist beispielsweise der Fall, wenn als anodenaktives Material elektrisch leitfähige Polymere, wie p-leitendes Polyacetylen oder p-leitendes Polyphenylen, verwendet werden. Die elektrisch leitfähigen Polymeren können dabei unmittelbar in Filmform eingesetzt oder in geeigneter Weise auf einen Träger aufgebracht werden. Die Pyrrole und die gegebenenfalls mitverwendeten Comonomeren werden hierbei auf die als anodenaktives Material eingesetzten, elektrisch leitfähigen Polymeren unter Ausbildung von chemischen Bindungen aufpolymerisiert, so dass man auf diese Weise einen schichtförmig aufgebauten Copolymerfilm hoher elektrischer Leitfähigkeit in beliebiger Länge und Grösse herstellen kann.

In dem Fall, in dem das gebildete filmförmige Polymere von dem anodenaktiven Material abgezogen wird, beispielsweise bei Verwendung eines rotierenden Zylinders oder eines um Walzen laufenden endlosen Bandes, hat es sich als sehr günstig erwiesen, wenn die längsseitigen Ränder des anodenaktiven Materials oberflächlich mit einem elektrisch nicht leitenden Material beschichtet sind. Für diese Beschichtung kommen beispielsweise Polymere, wie etwa Polyethylen, Polypropylen, Polystyrol und insbesondere Polytetrafluorethylen und ähnliche, in Betracht. Eine derartige Randbeschichtung erleichtert das Abziehen des Polymer-Filmes von dem anodenaktiven Material, da sich das Polymere nur zwischen den beschichteten Rändern auf dem anodenaktiven Material abscheidet und so beim Abziehen des Polymer-Filmes an diesen Rändern keine Probleme auftreten. Gleichermassen ist es bei Einsatz eines um Walzen laufenden endlosen Bandes zu empfehlen, wenn die Rückseite des Bandes, d.h. also die Oberfläche, die über die Transportwalzen läuft, aus einem elektrisch nicht leitenden Material besteht bzw. mit einem solchen beschichtet ist, so dass sich das Polymere nur auf der Oberseite des endlosen Bandes abscheiden kann. Gleiches gilt selbstverständlich auch bei Einsatz eines rotierenden Zylinders oder Zylindermantels, die so gestaltet sind, dass nur die äussere Oberfläche des Zylindermantels das anodenaktive Material bildet. Bei Einsatz eines endlichen Bandes als anodenaktivem Material kann die elektrolytische Beschichtung mit dem filmförmigen Polymeren der Pyrrole ein- oder beidseitig erfolgen, je nach dem, ob nur die eine oder beide Oberflächen anodenaktiv ausgestaltet sind; vorzugsweise ist jedoch nur die der Kathode zugekehrte Oberfläche anodenaktiv und die rückseitige Oberfläche aus elektrisch nicht leitendem Material.

Einige der Möglichkeiten zur Ausgestaltung der bewegten Anode für das erfindungsgemässe kontinuierliche Verfahren sind in den Fig. 1 bis 4 schematisch dargestellt. Fig. 1 zeigt eine Elektrolyse-Apparatur mit rotierender zylinderförmiger Anode. Fig. 2 stellt eine Elektrolyse-Apparatur dar, in der als bewegliche Anode ein endliches Band verwendet wird. Fig. 3 gibt ein als Anode einsetzbares, um Walzen laufendes endloses Band wieder. Fig. 4 ist ein Beispiel für eine Anode mit segmentierten, diskreten Flächen des anodenaktiven Materials. Die Figuren werden im folgenden näher beschrieben.

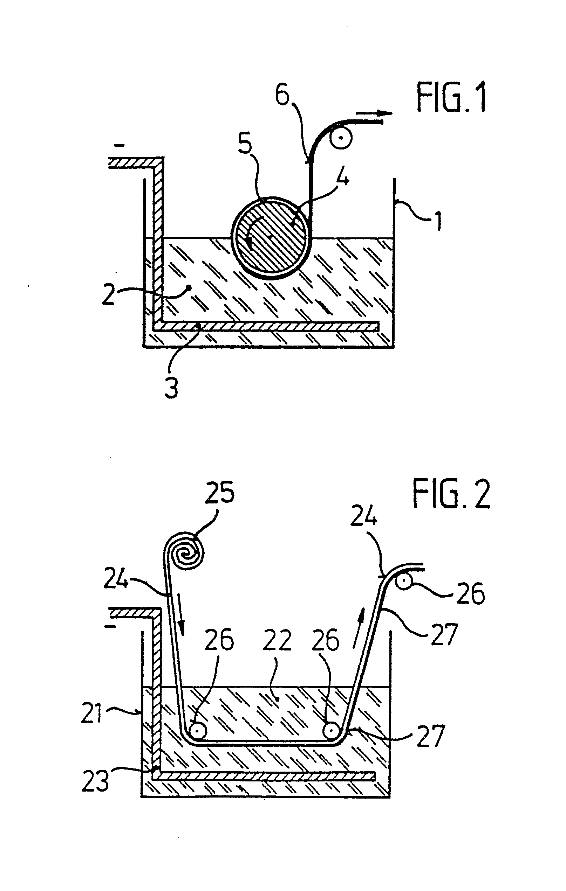

Fig. 1 zeigt schematisch ein einfaches Elektrolysegefäss (1) mit der Elektrolyt-Lösung (2) aus den Monomeren, dem Leitsalz und dem Elektrolyt-Lösungsmittel sowie einer darin eingetauchten Kathode (3). In die Elektrolyt-Lösung (2) ist als Anode eine rotierende Zylinder-Walze (4) etwa zur Hälfte eingetaucht. Die Oberflächenschicht (5) der Zylinder-Walze (4) bildet das anodenaktive Material und besteht vorzugsweise aus poliertem Nickel. Die Stromzu- bzw. -abfuhr zur Anode, die in Fig. 1 nicht gesondert dargestellt ist, kann in jeder beliebigen, geeigneten Weise erfolgen. Bei der Elektrolyse, bei der sich die Zylinderwalze (4) langsam durch die Elektrolyt-Lösung (2) dreht, scheidet sich auf dem anodenaktiven Material (5) das gebildete Polymer (6) filmförmig ab und kann, vorzugsweise nach dem Austritt aus der Elektrolyt-Lösung (2), von der Oberfläche (5) der Zylinder-Walze (4) als durchgehender Film abgezogen werden.

Fig. 2 verdeutlicht in schematischer Darstellung das erfindungsgemässe Verfahren bei Einsatz eines endlichen Bandes als anodenaktivem Material. In dem Elektrolyse-Gefäss (21) befindet sich die Elektrolyt-Lösung (22) aus den Monomeren, dem Leitsalz und dem Elektrolyt-Lösungsmittel, in die die Kathode (23) eingetaucht ist. Das anodenaktive Material (24), dessen Rückseite aus einem elektrisch nicht leitenden Stoff, beispielsweise einer Polytetrafluorethylen-Beschichtung, gebildet wird, läuft kontinuierlich von einem Wickel (25) in die Elektrolyt-Lösung (22) ein, wird über Umlenkwalzen (26) durch die Elektrolyt-Lösung (22) transportiert und wieder aus dieser ausgetragen. Die beliebig zu gestaltende Stromzu- bzw. -abfuhr zur Anode ist in Fig. 2 nicht wiedergegeben. Bei der Elektrolyse scheidet sich das gebildete Polymer (27) auf der Oberfläche des anodenaktiven Materials (24) ab und kann nach Austritt aus der Elektrolyt-Lösung (22) auf dem anodenaktiven Material (24) belassen oder von diesem abgezogen werden.

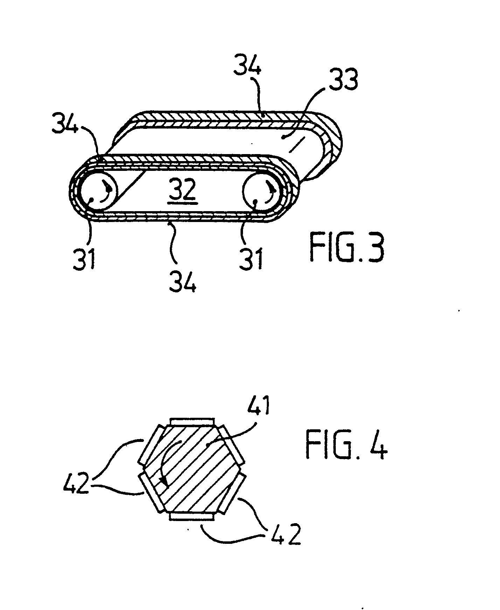

Fig. 3 zeigt ein endloses Band, das beispielsweise anstelle der Zylinder-Walze in Fig. 1 als Anode eingesetzt werden kann. Das um zwei Walzen (31) laufende endlose Band (32) bildet mit seiner Oberfläche (33) das anodenaktive Material. An seinen längsseitigen Rändern ist das endlose Band (32) seitlich als auch oberflächlich mit Randstreifen (34) aus elektrisch nicht leitfähigem Material versehen, die ein Abscheiden des Polymeren in diesen Bereichen verhindern. Dadurch wird ein leichtes und problemloses Abziehen des gebildeten Polymer-Films von der anodenaktiven Oberfläche (33) des endlosen Bandes (32) gewährleistet.

Fig. 4 stellt eine vorzugsweise Ausführungsform einer Anode mit segmentierten, diskreten Flächen des anodenaktiven Materials dar. Den Grundkörper bildet eine eckige, vielflächige Walze (41), deren Seitenflächen beispielsweise ein Sechseck darstellen. Auf die einzelnen Flächenbereiche der Walze (41) ist das anodenaktive Material (42) als Oberflächenschicht aufgebracht, wobei das anodenaktive Material (42) auf den einzelnen Flächen der Walze (41) voneinander getrennt ist. Damit stellt jeder Flächenbereich der Walze (41) ein diskretes, von den anderen getrenntes Anoden-Segment dar.

Die Art und Gestaltung der Kathode ist für das erfindungsgemässe kontinuierliche Verfahren beliebig wählbar. Die Kathode kann aus jedem geeigneten elektrisch leitfähigen Material, z.B. Graphit, gebildet werden; vorzugsweise besteht sie jedoch aus Metallen, z.B. Platin, Edelstahl und vorzugsweise poliertem Nickel. Zweckmässigerweise ist die Kathode flächenförmig ausgebildet, beispielsweise in Form eines Bleches, einer Folie oder eines Films. Besonders bewährt hat sich der Einsatz von gitter- oder netzförmigen Kathoden aus den genannten Metallen. Vorzugsweise ist die Kathode parallel, d.h. in gleichbleibendem Abstand zu dem durch die Elektrolyt-Lösung transportierten anodenaktiven Material angeordnet. Dies ist jedoch kein striktes Erfordernis. Es hat sich nämlich überraschenderweise gezeigt, dass beispielsweise bei Einsatz von rotierenden Zylinder-Walzen als Anode — wie in Fig. 1 dargestellt — die Kathode durchaus in ebener, nicht gekrümmter Form eingesetzt werden kann, wodurch sehr unterschiedliche Abstände zwischen kathoden- und anodenaktivem Material resultieren.

Dennoch wird bei der Elektrolyse ein sehr einheitlicher Polymer-Film gleichbleibender Schichtstärke erhalten. Es ist jedoch auch gleichermassen möglich, bei Einsatz einer Zylinder-Walze als Anode die flächenförmige Kathode der Form der Anode anzupassen, so dass der Abstand zwischen kathoden- und anodenaktivem Material überall gleich ist.

Neben einer einfachen Elektrolyse-Apparatur aus dem Elektrolyse-Gefäss für die Elektrolyt-Lösung sowie Kathode und Anode der beschriebenen Art können auch weiter ausgestaltete Elektrolyse-Einrichtungen für das erfindungsgemässe Verfahren Einsatz finden, die beispielsweise zwischen Anode und Kathode ein Diaphragma enthalten, oder solche mit Referenzelektroden zur exakten Potentialbestimmung. Zur Kontrolle der Schichtstärke der abgeschiedenen Filme ist eine Messung der Strommenge (Asek.) oder auch der Stromdichte ($A/cm^2$) zweckmässig.

Die Reaktionstemperatur, bei der das erfindungsgemässe Verfahren betrieben wird, hat sich als unkritisch erwiesen, so dass sie in einem breiten Bereich variiert werden kann, solange die Erstarrungstemperatur bzw. Siedetemperatur des Elektrolyt-Lösungsmittels nicht unter- bzw. überschritten wird. Im allgemeinen hat sich eine Reaktionstemperatur im Bereich von −40 bis +40° C als sehr vorteilhaft erwiesen, wobei normalerweise bei Raumtemperatur gearbeitet wird. Es ist zwar nicht notwendig, kann jedoch vorteilhaft sein, wenn die Elektrolyse unter Inertgas durchgeführt wird. Die Elektrolyt-Lösung kann während der Elektrolyse gerührt werden. Als vorteilhaft hat sich das Umpumpen der Elektrolyt-Lösung erwiesen, wobei definierte Arbeitstemperaturen über einen Thermostaten erreicht werden.

Im übrigen können in dem erfindungsgemässen Verfahren die für die elektrochemische Polymerisation von Pyrrolen üblichen und bekannten Elektrolyse-Bedingungen angewandt werden. Zweckmässigerweise liegt die Spannung, mit der die Elektrolyse betrieben wird, im Bereich von etwa 1 bis 50 V, vorzugsweise im Bereich von 2 bis 20 V. Für die Stromdichte haben sich Werte im Bereich von 0,5 bis 100 $mA/cm^2$, vorzugsweise im Bereich von 1 bis 50 $mA/cm^2$, als besonders vorteilhaft erwiesen.

Mit dem erfindungsgemässen Verfahren können selbsttragende Filme unterschiedlicher Schichtstärke hergestellt werden. Im allgemeinen liegt die Dicke der erhaltenen Filme im Bereich von 10 bis 100 µm. Die Filmdicke kann dabei durch die Verweilzeit des anodenaktiven Materials in der Elektrolyt-Lösung als auch insbesondere über die Stromdichte variiert und eingestellt werden. Die erhaltenen Filme der Polymeren der Pyrrole können zur Entfernung von anhaftendem Leitsalz mit Lösungsmitteln gewaschen und bei Temperaturen von 30 bis 150° C, vorzugsweise unter Vakuum, getrocknet werden. Die Filme lassen sich anschliessend in jeder gewünschten Form weiterverarbeiten und für die verschiedensten Anwendungen einsetzten.

Bei den erfindungsgemäss hergestellten filmförmigen Polymeren von Pyrrolen handelt es sich um elektrisch hochleitfähige Systeme, die zumindest teilweise das Anion des bei ihrer Herstellung verwendeten Leitsalzes enthalten. Man kann diese Polymere daher auch als Komplexe aus Kationen der Polymeren der Pyrrole und Gegenanionen bezeichnen. Die elektrische Leitfähigkeit der Polymeren der Pyrrole liegt im allgemeinen im Bereich von $10^°$ bis $10^2 \Omega^{-1} cm^{-1}$, gemessen nach der Zweipunkt- oder Vierpunkt-Methode. Auch im übrigen besitzen die nach dem erfindungsgemässen kontinuierlichen Verfahren hergestellten filmförmigen Polymeren der Pyrrole die gleichen Eigenschaften wie die nach den bekannten elektrochemischen Verfahren hergestellten Produkte. Sie finden — wie diese — Anwendung bei der Herstellung von Elektroden, Katalysatoren, elektrischen Speichersystemen, Batterien, Schaltern, Halbleiter-Bauteilen, Abschirmmaterialien, Solarzellen und anderem sowie zur antistatischen Ausrüstung von Kunststoffen.

Die Erfindung wird durch die nachfolgenden Beispiele näher erläutert. Die in den Beispielen angegebenen Teile und Prozente beziehen sich, sofern nicht anders vermerkt, auf das Gewicht.

*Beispiel 1*

Es wurde in einer Elektrolyse-Apparatur gearbeitet, wie sie in Fig. 1 schematisch dargestellt ist. Das Elektrolyse-Gefäss (1) bestand aus Glas und enthielt eine Elektrolyt-Lösung (2) von 3200 ml Acetonitril, 15 g Pyrrol und 25 g des Tri-n-butylammonium-Salzes der Benzolsulfonsäure. Als Kathode diente ein 15 cm × 10 cm grosses Gitter aus Edelstahl. Die rotierende Zylinder-Walze (4) hatte einen Durchmesser von ca. 20 cm und eine anodenaktive Oberfläche (5) aus poliertem Nickel von 420 cm². Kathode und Anode waren so angeordnet, dass die Zylinder-Walze (4) etwa zur Hälfte in die Elektrolyt-Lösung (2) eintauchte und ihr geringster Abstand zur Kathode (3) 35 mm betrug. Die Elektrolyse wurde mit einer Stromdichte von 5 mA/cm² betrieben. Die Zylinder-Walze drehte sich dabei mit einer Geschwindigkeit von 2 U/h. Während der Elektrolyse wurde die Elektrolyt-Lösung (2) mit einem Magnet-Rührer gerührt. Dabei schied sich auf der anodenaktiven Oberfläche (5) der Zylinder-Walze (4) ein Polypyrrol-Film in einer Stärke von 65 µm ab, der sich ausserhalb der Elektrolyt-Lösung (2) problemlos von der Zylinder-Walze (4) abziehen liess und auf einer Rolle synchron aufgewickelt wurde. Die Elektrolyse wurde über einen Zeitraum von 24 Stunden unterbrochen betrieben. Der erhaltene Polypyrrol-Film hatte nach Spülen mit Acetonitril und Trocknen bei 60° C eine elektrische Leitfähigkeit $50 \Omega^{-1} cm^{-1}$.

*Beispiel 2*

Es wurde wie in Beispiel 1 beschrieben gearbeitet, jedoch die Umdrehungsgeschwindigkeit der rotierenden Zylinderwalze auf 4 U/h erhöht. Es wurde ein Polypyrrol-Film von 25 µm Dicke bei gleicher elektrischer Leitfähigkeit erhalten.

*Beispiel 3*

Es wurde wie in Beispiel 2 gearbeitet mit dem Unterschied, dass diesmal mit einer Stromdichte von 20 mA/cm² elektrolysiert wurde. Der erhaltene Polypyrrol-Film hatte eine Schichtstärke von ca. 40 µm und eine elektrische Leitfähigkeit von $50 \Omega^{-1} cm^{-1}$.

*Beispiel 4*

Es wurde wie in Beispiel 1 beschrieben gearbeitet, als Monomeren diesmal jedoch eine Mischung aus 7,5 g Pyrrol und 7,5 g Furan eingesetzt. Der erhaltene elektrisch hochleitfähige Polymerfilm einer Stärke von 55 µm zeichnete sich durch einen hohen Oberflächenglanz und eine Reissfestigkeit von 55 N/cm² aus.

**Patentansprüche**

1. Verfahren zur Herstellung von filmförmigen Polymeren von Pyrrolen durch elektrochemische Polymerisation von substituierten Pyrrolen oder unsubstituiertem Pyrrol oder Mischungen von Pyrrolen mit Comonomeren in einem Elektrolyt-Lösungsmittel in Gegenwart von Leitsalzen unter Abscheiden des filmförmigen Polymeren auf der Oberfläche der Anode, dadurch gekennzeichnet, dass die Elektrolyse kontinuierlich betrieben wird, indem man fortlaufend durch die Elektrolyt-Lösung flächenförmig ausgebildetes anodenaktives Material zur Abscheidung des filmförmigen Polymeren hierauf durchführt.

2. Verfahren nach Anspruch 1, dadurch gekennzeichnet, dass das anodenaktive Material bandförmig zusammenhängend ausgebildet ist.

3. Verfahren nach Anspruch 1 oder 2, dadurch gekennzeichnet, dass das anodenaktive Material fortlaufend in die Elektrolyt-Lösung eingezogen, durch diese unter Abscheidung des filmförmigen Polymeren hierauf transportiert und anschliessend wieder aus der Lösung ausgetragen wird.

4. Verfahren nach Ansprüchen 1 bis 3, dadurch gekennzeichnet, dass als anodenaktives Material die Oberfläche eines endlosen Bandes oder eines rotierenden Zylinders oder Zylindermantels dient, von der das gebildete filmförmige Polymere kontinuierlich abgezogen wird.

5. Verfahren nach Anspruch 3, dadurch gekennzeichnet, dass das bandförmige anodenaktive Material von einem Wickel abgezogen, durch die Elektrolyt-Lösung transportiert und aus dieser Lö-

sung wieder ausgetragen wird, wobei das gebildete filmförmige Polymere auf dem anodenaktiven Material belassen oder nach dessen Austrag aus der Elektrolyt-Lösung von diesem abgezogen wird.

6. Verfahren nach einem der Ansprüche 1 bis 5, dadurch gekennzeichnet, dass das anodenaktive Material an den längsseitigen Rändern oberflächlich mit einem elektrisch nicht leitenden Material beschichtet ist.

7. Verfahren nach einem der Ansprüche 1 bis 6, dadurch gekennzeichnet, dass eine gitter- oder netzförmige Kathode eingesetzt wird.

8. Verfahren nach einem der Ansprüche 1 bis 7, dadurch gekennzeichnet, dass die elektrochemische Polymerisation mit einer Spannung von 1 bis 50 V und einer Stromdichte von 0,5 bis 100 mA/cm$^2$ betrieben wird.

9. Verfahren nach einem der Ansprüche 1 bis 8, dadurch gekennzeichnet, dass Pyrrole zusammen mit anderen 5- und/oder 6gliedrigen Heteroaromaten copolymerisiert werden.

10. Verfahren nach einem der Ansprüche 1 bis 9, dadurch gekennzeichnet, dass als Leitsalz eine ionische oder ionisierbare Verbindung mit einem Anion aus der Gruppe $BF_4^-$, $AsF_4^-$, $AsF_6^-$, $SbF_6^-$, $SbCl_6^-$, $PF_6^-$, $ClO_4^-$, $HSO_4^-$ und $SO_4^{2-}$ eingesetzt wird.

11. Verfahren nach einem der Ansprüche 1 bis 9, dadurch gekennzeichnet, dass als Leitsalze Salze von Aromaten mit sauren Gruppen eingesetzt werden.

12. Verfahren nach Anspruch 11, dadurch gekennzeichnet, dass die Aromaten mit sauren Gruppen substituierte oder unsubstituierte Benzolsulphonsäure sind.

## Claims

1. A process for the production of a polypyrrole film by electrochemically polymerizing a substituted or unsubstituted pyrrole, or a mixture thereof with comonomers, in an electrolyte solvent in the presence of a conductive salt, with the deposition of the polymer in the form of a film on the surface of the anode, wherein the electrolysis is carried out continuously by passing anodic material, having a sheet-like structure, continuously through the electrolyte solution to deposit the polymer film on the anodic material.

2. A process as claimed in claim 1, wherein the anodic material is in the form of a continuous belt.

3. A process as claimed in claim 1 or 2, wherein the anodic material is drawn continuously into the electrolyte solution, transported through this solution while the polymer film is deposited on the anodic material, and then drawn out of the solution again.

4. A process as claimed in claims 1 to 3, wherein the surface of an endless belt or of a rotating cylinder or cylindrical jacket serves as anodic material, from which surface the resulting polymer film is removed continuously.

5. A process as claimed in claim 3, wherein the anodic material, in the form of a belt, is drawn off a roll, transported through the electrolyte solution and then drawn out of this solution again, the resulting polymer film being left on the anodic material or being removed from this material after it has emerged from the electrolyte solution.

6. A process as claimed in any of claims 1 to 5, wherein the longitudinal edges of the anodic material are superficially coated with an electrically insulating material.

7. A process as claimed in any of claims 1 to 6, wherein the cathode employed is in the form of a lattice or net.

8. A process as claimed in any of claims 1 to 7, wherein the electrochemical polymerization is carried out using a voltage of from 1 to 50 V and a current density of from 0.5 to 100 mA/cm$^2$.

9. A process as claimed in any of claims 1 to 8, wherein the pyrrole is copolymerized with another five- and/or six-membered heteroaromatic compound.

10. A process as claimed in any of claims 1 to 9, wherein the conductive salt used is an ionic or ionizable compound containing an anion from the group consisting of $BF_4^-$, $AsF_4^-$, $AsF_6^-$, $SbF_6^-$, $SbCl_6^-$, $PF_6^-$, $ClO_4^-$, $HSO_4^-$ and $SO_4^{2-}$.

11. A process as claimed in any of claims 1 to 9, wherein the conductive salt used is a salt of an aromatic containing acidic groups.

12. A process as claimed in claim 11, wherein the aromatic containing acidic groups is a substituted or unsubstituted benzenesulfonic acid.

## Revendications

1. Procédé de préparation de polymères de pyrroles en forme de feuilles ou de pellicules par une polymérisation électrochimique du pyrrole non substitué ou de pyrroles subtitués ou de mélanges de pyrroles et de comonomères dans un solvant-électrolyte en présence de sels conducteurs, le polymère pelliculaire étant déposé à la surface de l'anode, caractérisé en ce que l'électrolyse est réalisé en continu par le passage continu à travers la solution d'électrolyte d'un matériau agissant comme anode de forme plane, sur lequel se dépose le polymère pelliculaire.

2. Procédé suivant la revendication 1, caractérisé en ce que le matériau agissant comme anode possède la forme d'une bande continue.

3. Procédé suivant la revendication 1 ou 2, caractérisé en ce que le matériau agissant comme anode est introduit de façon continue dans la solution d'électrolyte, traverse celle-ci avec dépôt concomitant du polymère pelliculaire et quitte la solution de manière continue.

4. Procédé suivant les revendications 1 à 3, caractérisé en ce que le matériau agissant comme anode est constitué par la surface d'une bande sans fin ou d'un cylindre ou corps cylindrique rotatif, dont le polymère pelliculaire déposé est enlevé en continu.

5. Procédé suivant la revendication 3, caractérisé en ce que le matériau agissant comme anode

en forme d band est dévidé d'une bobine et traverse la solution d'électrolyte, puis quitte la solution, le polymère pelliculaire déposé sur le matériau anodique restant sur celui-ci ou étant enlevé après la sortie de la solution d'électrolyte.

6. Procédé suivant l'une des revendications 1 à 5, caractérisé en ce que le matériau agissant comme anode est pourvu, le long de ses bords longitudinaux, d'un revêtement superficiel en une matière ne conduisant pas l'électricité.

7. Procédé suivant l'une des revendications 1 à 6, caractérisé en ce que la cathode employée possède une structure en treillis ou en réseau.

8. Procédé suivant l'une des revendications 1 à 7, caractérisé en ce que la polymérisation électrochimique est effectuée avec une tension de 1 à 50 V et une densité de courant de 0,5 à 100 milliampères par cm$^2$.

9. Procédé suivant l'une des revendications 1 à 8, caractérisé en ce que l'on copolymérise des pyrroles et d'autres substances aromatiques hétérocycliques penta- et(ou) hexagonales.

10. Procédé suivant l'une des revendications 1 à 9, caractérisé en ce que le sel conducteur est choisi parmi les composés ioniques ou ionisables avec un anion du groupe $BF_4^-$, $AsF_4^-$, $AsF_6^-$, $SbF_6^-$, $SbCl_6^-$, $PF_6^-$, $ClO_4^-$, $HSO_4^-$ et $SO_4^{2-}$.

11. Procédé suivant l'une des revendications 1 à 9, caractérisé en ce que les sels conducteurs sont choisis parmi les sels de substances aromatiques à groupes acide.

12. Procédé suivant la revendication 11, caractérisé en ce que les substances aromatiques à groupes acide sont des acides benzène-sulfoniques substitués ou non substitués.

FIG.1

FIG.2

FIG.3

FIG. 4